# EUROPÄISCHE PATENTSCHRIFT

(11) **EP 2 558 262 B1**
(45) Veröffentlichungstag und Bekanntmachung des Hinweises auf die Patenterteilung: **04.06.2014**
(21) Anmeldenummer: 11717454.0
(22) Anmeldetag: 13.04.2011
(51) Int. Cl.: B29B 17/04

(54) **VERFAHREN UND VORRICHTUNG ZUR AUFBEREITUNG UND REINIGUNG VON POLYMERMATERIAL MITTELS EINER LANZE**
METHOD AND APPARATUS FOR RECYCLING AND CLEANING OF POLYMERIC MATERIAL BY MEANS OF A LANCE
PROCÉDÉ ET DISPOSITIF DE RECYCLAGE ET DE NETTOYAGE D'UN MATERIAU POLYMERIQUE VIA UNE LANCE

(30) Priorität: 16.04.2010 AT 6292010
(43) Veröffentlichungstag der Anmeldung: 20.02.2013
(73) Patentinhaber: EREMA Engineering Recycling Maschinen und Anlagen Gesellschaft m.b.H., 4052 Ansfelden (AT)
(72) Erfinder: FEICHTINGER, Klaus, A-4040 Linz (AT); HACKL, Manfred, A-4040 Linz-Urfahr (AT); WENDELIN, Gerhard, A-4030 Linz (AT)
(74) Vertreter: Wildhack, Andreas
(86) Internationale Anmeldenummer: PCT/AT2011/000179
(87) Internationale Veröffentlichungsnummer: WO 2011/127507

(56) Entgegenhaltungen:
- EP-A1- 0 103 754
- WO-A1-97/18071
- DE-B1- 2 839 446
- JP-A- 2001 026 019
- JP-A- 2001 030 244

## Beschreibung

Die Erfindung betrifft ein Verfahren gemäß Anspruch 1 sowie eine Vorrichtung gemäß Anspruch 6.

Zahlreiche Kunststoff-Recycling-Anwendungen leiden unter problematischen Beschickungseinflüssen wie hoher Restfeuchte, großen Dichteschwankungen, zu großen Aufgabeportionen etc. Dadurch werden die Performance des nachgeschalteten Extruders bzw. die Wirtschaftlichkeit des Verfahrens negativ beeinflusst. Der Extruder leidet unter diesen Beschickungseinflüssen, was zu reduzierter und schwankender Ausstoßleistung, ungleichmäßiger Aufschmelzleistung, reduzierter Produktqualität, gegebenenfalls erhöhtem Verschleiß und insgesamt zu einer reduzierten Produktivität führt.

Besonders unangenehm ist es, wenn die flüchtigen Stoffe mit dem bearbeiteten Material aus dem Aufnahmebehälter abtransportiert werden und in den direkt oder indirekt an den Aufnahmebehälter angeschlossenen Extruder gelangen, da dann die Gefahr besteht, dass im extrudierten Material Gaseinschlüsse unterschiedlicher Art vorhanden sind, was die Qualität des am Extruderausgang erhaltenen Materials Wesentlich herabsetzt. Diese Gefahr kann auch durch eine zumeist im Extruder vorgesehene Entgasungseinrichtung nicht völlig beseitigt werden. Zudem sind solche flüchtige Substanzen bzw. Störstoffe zumeist nicht von vornherein zu vermeiden, denn es handelt sich um Wasserdampf, Abspaltprodukte des zu bearbeitenden Materials, gasförmige oder verdampfte Kühlmittelanteile usw.. Insbesondere bei feuchtem Ausgangsmaterial können diese flüchtigen Störsubstanzanteile erheblich sein.

Als Störsubstanzen sind grundsätzlich alle Stoffe anzusehen, die aus dem zu behandelnden Material austreten bzw. sich von dem eingebrachten Material lösen bzw. eventuell sogar gemeinsam mit dem Material eingebracht werden und die eine spätere Beeinträchtigung der Verarbeitung nach sich ziehen können. Die Störstoffe können außen an den Oberflächen des aufzubereitenden Materials anhaften, wie dies insbesondere bei Waschwasser, Oberflächenbeschichtungen etc. der Fall ist und dann dort verdunsten, sublimieren, sich von der Oberfläche lösen od. dgl.. Die Störstoffe können aber auch in der Matrix des Materials bzw. im Inneren des Materials vorliegen und dann im Zuge der Bearbeitung nach außen diffundieren und dort verdunsten, sublimieren od. dgl.. Dies ist insbesondere bei organischen Zusatzstoffen, beispielsweise bei Weichmachern, zu beachten, aber auch Wasser, Monomere, Gase oder Wachse können in der Matrix vorliegen. Es kann sich bei den zu entfernenden Störstoffen somit auch um sublimierende Feststoffe oder um Staub handeln.

Aus dem Stand der Technik, z. B. aus der WO 00/74912 A1, sind Vorrichtungen mit zwei übereinander angeordneten Mischwerkzeugen im Schneidverdichter bekannt, die diese Probleme verringern. Derartige Vorrichtungen haben sich für die Aufbereitung, insbesondere thermoplastischen, Kunststoffmateriales bewährt. Trotzdem sind derartige Vorrichtungen zumeist nicht imstande, sämtliche Störsubstanzen restlos zu entfernen, was eine Beeinträchtigung der Aufbereitung bzw. Verarbeitung zur Folge hat. Probleme gibt es dabei insbesondere bei Kunststoffmaterialien mit hoher externer Feuchtigkeit, wie beispielsweise Polyolefinwaschschnitzel etc.. Auch Materialien mit hoher interner Feuchtigkeit, beispielsweise PA-Fasern, sind problematisch. Zwischen den Scheiben bzw. Mischwerkzeugen kann es dann beispielsweise durch die mit Feuchtigkeit gesättigte Luft, zu Kondensation und Verdampfung kommen, was wiederum, neben den bereits erwähnten Nachteilen, zu einem erhöhten Energiebedarf des Systems führt.

Um dieses Problem weiter zu verringern, ist aus der EP 2 117 796 A1 eine Vorrichtung bekannt, bei der ein Gas unterhalb des Materiallevels der sich ausbildenden Mischthrombe ins Innere des Schneidverdichters eingebracht wird und das mit Störstoffen angereicherte Gas oberhalb des Materiallevels der Mischthrombe wieder ausgebracht wird. Das Gas wird bei dieser Vorrichtung über den Boden, über die Seitenwände oder über die Mischwerkzeuge zugeführt. Die im Material vorhandene Feuchtigkeit bzw. die Störstoffe werden auf diese Weise effektiv entfernt.

*Weiters sind aus der* EP 103 754 A1 *sowie der* JP 2001 030244 *Vorrichtungen bekannt, bei denen Druckluft über in den Innenraum des Aufnahmebehälters ragende Elemente, beispielsweise in Form von Sprühdüsen, eingeleitet werden kann.*

Aufgabe der vorliegenden Erfindung ist es, ein vorteilhaftes, kostengünstiges und wirksames Verfahren zur möglichst vollständigen Entfernung unerwünschter Störstoffe, die die Aufbereitung bzw. weitere Bearbeitung des Materials beeinträchtigen, zu schaffen.

Außerdem ist es Aufgabe der Erfindung, eine konstruktiv einfache und stabile Vorrichtung zu schaffen, mit der das Spülmedium effizient einbringbar ist.

Diese Aufgabe wird bei einem Verfahren der eingangs erwähnten Art durch die kennzeichnenden Merkmale des Anspruchs 1 gelöst.

Dabei ist erfindungsgemäß vorgesehen, dass *die Lanze im Wesentlichen plattenförmig bei verhältnismäßig geringer Dicke ist, mit einer nach oben weisenden, gegebenenfalls parallel zur Bodenfläche ausgerichteten, Oberfläche und einer nach unten weisenden gegenüberliegenden, vorzugsweise parallel zur Oberfläche ausgerichteten, Unterfläche. Auf diese Weise streichen die Flakes beidseitig an der Lanze vorbei. Dies ergibt eine stabile und strömungstechnisch günstige Ausführungsform.*

Es hat sich in Versuchen überraschend herausgestellt, dass die erfindungsgemäße Anordnung der Zufuhrmittel auf den nach innen ragenden Lanzen einen bemerkenswert positiven Einfluss auf die Durchströmung des Materials mit dem Spülmedium und dadurch auf die Entfernung der Störsubstanzen hat. Das Spülmedium wird damit nicht nur am äußersten Rand des Aufnahmebehälters bzw. der Mischthrombe eingebracht - wie dies der Fall ist, wenn das Spülmedium über Öffnungen im Boden oder der Seitenwand eingebracht wird - sondern weiter ins Innere des Behälters, wodurch es sich auch besser und gleichmäßiger verteilen kann. Außerdem wird das Spülmedium über fixe bzw. ruhende Elemente eingebracht - im Unterschied zu der Einbringung des Spülmediums über rotierende Mischwerkzeuge. Auf diese Weise ist die Dosierung des Spülmediums konstruktiv sehr einfach gelöst und kann das Spülmedium trotzdem auch in Bereiche eingebracht werden, die im Inneren des Aufnahmebehälters liegen. Während man bei der Einbringung des Spülmediums über die Mischwerkzeuge auf die Positionen der Mischwerkzeuge beschränkt ist, können die erfindungsgemäßen Lanzen in jeder beliebigen Höhe und Anzahl im Aufnahmebehälter angeordnet werden. Dadurch kann auf die Besonderheiten der Mischthrombe bzw. die Bewegungsverläufe der Teilchen Rücksicht genommen werden und der günstigste Zudosierungspunkt ausgewählt werden. Weiters bietet eine nach innen ragende Lanze den Vorteil, dass sich das Material an der Lanze vorbeidrängen muss und die Flakes allseitig und direkt mit Spülmedium beaufschlagt werden, wohingegen bei einer Einbringung über die Seitenwand nur die äußerste Strömungsschicht der Flakes direkt mit Spülmedium beaufschlagt wird.

Das erfindungsgemäße Verfahren führt somit zu einer konstruktiv einfach gelösten und sehr effektiven Entfernung von Störsubstanzen bei gleichzeltig geringem Einsatz an Spülmedium.

Weitere vorteilhafte Ausgestaltungen der Erfindung werden in den abhängigen Ansprüchen beschrieben:

Wesentlich ist, dass das Spülmedium immer in einer Höhe unterhalb des Materialniveaus eingebracht wird, wobei es zusätzlich vorteilhaft ist, wenn das Spülmedium im Bereich des unteren Drittels der Höhe des Aufnahmebehälters in den Aufnahmebehälter eingebracht wird. Durch die Einblasung eines Spülmediums von unten kommt es zudem zu einer Auflockerung des Sumpfes, wodurch eine noch bessere Aufbereitung des Materials gewährleistet wird. In diesem Bereich erfolgt dadurch eine intensive Durchmischung und eine gute Verteilung des Spülmediums im Material.

In diesem Zusammenhang ist es vorteilhaft, wenn vorgesehen ist, dass das Spülmedium im Bereich unterhalb des bodennächsten Mischwerkzeuges in den Aufnahmebehälter eingebracht wird. Gerade in diesem Bereich mit relativ geringerer Durchwirbelung setzen sich oft Störsubstanzen hartnäckig fest und werden auf diese Weise auch aus diesem sensiblen Bereich effektiv ausgebracht.

Vorteilhafterweise münden die Zufuhrmittel nicht im Bereich der Kanten der Trägerscheiben bzw. Mischwerkzeuge, sondern ist vorgesehen, dass das Spülmedium bei Vorliegen von zwei oder mehr übereinanderliegenden Mischwerkzeugen im Bereich zwischen den Mischwerkzeugen in den Aufnahmebehälter eingebracht wird, wodurch auch in diesem Bereich eine effektive Reinigung erfolgt.

Eine bewährte Ausführungsform sieht vor, dass das Spülmedium in demjenigen Bereich des Behälters eingebracht wird, in dem die im Aufnahmebehälter bewegten bzw. rotierenden Materialteilchen den höchsten Druck auf die Seitenwand des Aufnahmebehälter ausüben.

In diesem Zusammenhang ist es vorteilhaft, wenn das Spülmedium ein gasförmiges Medium, insbesondere Luft oder ein Inertgas ist.

Vorteilhafterweise wird das Spülmedium, bevor es in den Aufnahmebehälter gelangt, über eine vorgeschaltete Heizeinrichtung oder eine Gastrocknungseinrichtung erwärmt und/oder vorgetrocknet. Auf diese Weise kann die Entfernung der Störstoffe bzw. die Verfahrensführung effektiv beeinflusst und gesteuert werden.

Das Polymermaterial ist im Aufnahmebehälter permanent stückig und teilchenförmig und liegt in einem erweichten bzw. leicht teigigen Zustand vor, in dem die einzelnen Teilchen zwar klebrig, aber nicht geschmolzen sind. Durch die Bewegung der Mischwerkzeuge werden die klebrigen Teilchen dennoch fließfähig und stückig gehalten.

Nach entsprechender Verweilzeit ist vorgesehen, dass das Polymermaterial über eine Schnecke deren Gehäuse mit einer Einzugsöffnung an eine Austragöffnung des Aufnahmebehälters angeschlossen ist, vorzugsweise über einen Extruder, ausgebracht wird, wobei die Austragöffnung in der Seitenwand nahe der Bodenfläche des Aufnahmebehälter angeordnet ist.

Die zuvor genannte Aufgabe wird weiters durch eine Vorrichtung der eingangs genannten Art gelöst, bei der erfindungsgemäß vorgesehen ist, *dass die Lanze im Wesentlichen plattenförmig bei verhältnismäßig geringer Dicke ist, mit einer nach oben weisenden, gegebenenfalls parallel zur Bodenfläche ausgerichteten, Oberfläche und einer nach unten weisenden gegenüberliegenden, vorzugsweise parallel zur Oberfläche ausgerichteten, Unterfläche. Auf diese Weise streichen die Flakes beidseitig an der Lanze vorbei und es ergibt eine stabile und strömungstechnisch günstige Ausführungsform.*

Dadurch ist es auf konstruktiv sehr einfache und unkomplizierte Art möglich, Gas bzw. Spülmedium in den Aufnahmebehälter einzubringen. Außerdem kann das Spülmedium nicht nur ganz außen, sondern auch in weiter innen liegende Bereiche des Aufnahmebehälters eingebracht und dort gut verteilt werden, wodurch die Reinigungseffekte beschleunigt und verbessert werden.

Gemäß einer konstruktiv einfachen und stabilen Ausführungsform ist vorgesehen, dass die Lanze parallel zum Mischwerkzeug oder normal zur Achse ausgerichtet ist und/oder dass die Lanze im Wesentlichen radial oder leicht versetzt bzw. zur Radialen geneigt nach innen gerichtet ist.

*Es ist* reibungs- und strömungstechnisch besonders vorteilhaft, wenn vorgesehen ist, dass die Lanze bzw. die Oberfläche die Form einer Haifischflosse aufweist, mit einer zur Bewegungs- bzw. Drehrichtung des Mischwerkzeugs weisenden gekrümmten, und vorzugsweise gerundeten, Vorderkante und einer stromabwärts gelegenen geraden oder gekrümmten Hinterkante, wobei die Vorderkante und die Hinterkante vorzugsweise zu einer Spitze zusammenlaufen.

Eine konstruktiv einfache Ausführungsform sieht vor, dass die Zufuhrmittel als einzelne, singuläre Öffnungen oder als Düsen mit einem jeweiligen Durchmesser zwischen 10 und 30 mm, vorzugsweise etwa 20 mm, ausgebildet sind.

Um Verklebungen der Zuführmittel zu vermeiden, ist es vorteilhaft, wenn die Zufuhrmittel bündig mit der Außenfläche der Lanze abschließen.

Um die Tatsache auszunutzen, dass die Flakes beidseitig an der Lanze vorbeistreichen, ist es günstig, wenn die Zufuhrmittel sowohl auf der Oberfläche als auch auf der Unterfläche ausgebildet oder angeordnet sind. Auf diese Weise kann die Reinigungsleistung erhöht bzw. verdoppelt werden.

Bei manchen Materialien kann es vorteilhaft sein, wenn die Zufuhrmittel, gegebenenfalls sogar ausschließlich, in bzw. auf der Hinterkante ausgebildet oder angeordnet sind, auf der nur geringer bzw. gar kein Staudruck durch die entgegenlaufenden Materialien besteht.

Um die Reinigungsleistung zu erhöhen, ist es vorteilhaft, wenn auf jeder Lanze mehrere Zufuhrmittel, vorzugsweise in parallel zur Vorderkante oder Hinterkante verlaufenden Reihen, ausgebildet oder angeordnet sind. Auf diese konstruktiv einfache Weise kann mehr Gas ins Innere des Aufnahmebehälters eingeblasen werden.

Vorteilhafterweise sind auf jeder Lanze zwischen 3 bis 8 Öffnungen vorgesehen, wobei die Gesamtöffnungsfläche aller auf einer oder allen Lanzen ausgebildeten Öffnungen vorteilhafterweise zwischen 380 mm² und 6000 mm² liegt.

Gerade im Bereich unterhalb des bodennächsten Mischwerkzeuges sammeln sich häufig Störsubstanzen an, weshalb es vorteilhaft ist, gerade dort eine Lanze anzuordnen.

Wenn die Lanze im Bereich des unteren Drittels der Höhe des Aufnahmebehälters angeordnet ist, wird auch der Sumpf effizient aufgewirbelt und die Reinigungseffizienz erhöht.

Eine weitere vorteilhafte Ausführungsform sieht vor, dass im Aufnahmebehälter zumindest zwei übereinander angeordnete Mischwerkzeuge vorgesehen sind und die Lanze im Bereich, vorzugsweise mittig, zwischen den Mischwerkzeugen angeordnet ist.

Weiters kann es vorteilhaft sein, wenn die Lanze in demjenigen Bereich der Seitenwand des Behälters angeordnet ist, in dem die im Behälter bewegten bzw. rotierenden Materialteilchen den höchsten Druck auf die Seitenwand des Behälters ausüben.

Um die Reinigungswirkung weiter zu erhöhen, ist es vorteilhaft, wenn mehrere Lanzen vorgesehen sind, die auf gleicher Höhe über den Umfang der Seitenwand des Aufnahmebehälters, vorzugsweise regelmäßig verteilt, angeordnet sind.

Die Zufuhrmittel können außen auf der Oberfläche der Lanze angeordnet sein und über externe Kanäle mit Spülmedium versorgt werden.

Eine besonders vorteilhafte Ausführungsform sieht allerdings vor, dass die Lanze hohl ist oder dass in der Lanze ein Kanal oder Hohlraum ausgebildet ist, der mit einem Bereich außerhalb des Aufnahmebehälters in Fluidverbindung steht, durch den das Spülmedium einbringbar ist und zum Zufuhrmittel strömen kann. Diese konstruktiv einfache Lösung sorgt für eine sichere Gaseinbringung.

Um das Spülmedium möglichst weit ins Innere des Aufnahmebehälters einzubringen, ist es vorteilhaft, wenn sich die Lanze zumindest über einen Länge von größer gleich 10 %, vorzugsweise 20 %, des Radius des Aufnahmebehälters erstreckt.

In diesem Zusammenhang ist es besonders vorteilhaft, wenn das am weitest innen gelegene Zufuhrmittel jeder Lanze einen radialen Abstand zur Seitenwand von größer gleich 10 %, vorzugsweise 20 %, des Radius des Aufnahmebehälters aufweist. Auf diese Weise wird das Spülmedium gleichmäßig in den Polymerflakes verteilt.

Da die Form der Mischthrombe und die Wege, die die Polymerteilchen, verursacht durch die Mischwerkzeuge, im Aufnahmebehälter nehmen, abhängig von den Materialien und den Drehzahlen sind und damit nicht immer identisch verlaufen, ist es vorteilhaft, wenn die Lanze drehbar an der Seitenwand befestigt ist bzw. der Neigungs- bzw. Anstellungswinkel der Lanze zur Bodenfläche bzw. der Winkel der Oberfläche zur Bodenfläche verstellbar ist. Die Verstellbarkeit sollte dabei mindestens in einem Bereich von ± 45° von der horizontalen Mittenlage gegeben sein. Auf diese Weise kann die strömungstechnisch günstigste Stellung eingestellt werden bzw. diejenige Stellung, bei der die Beaufschlagung der Teilchen mit Spülmedium am effizientesten ist.

Um ein Mitreißen von Materialteilchen durch eine zu starke Absaugung zu verhindern, ist es vorteilhaft, die Abfuhrmittel möglichst weit entfernt vom Materiallevel anzuordnen. Insbesondere ist es dabei vorteilhaft, wenn im Aufnahmebehälter oberhalb des Niveaus des im Betrieb im Aufnahmebehälter befindlichen Materials bzw. oberhalb des Materiallevels der Mischthrombe zumindest ein Abfuhrmittel für den Austritt des mit Störstoffen angereicherten bzw. gesättigten Spülmediums aus dem Aufnahmebehälter vorgesehen ist, beispielsweise eine Öffnung im Behälterdeckel oder der Behälterwand.

Eine konstruktiv stabile und bewährte Ausführungsform sieht vor, dass der Aufnahmebehälter im Wesentlichen zylindrisch mit einer ebenen Bodenfläche und einer dazu vertikal ausgerichteten zylindermantelförmigen Seitenwand ist und/oder die Drehachse mit der zentralen Mittelachse des Aufnahmebehälters zusammenfällt und/oder die Drehachse oder die zentrale Mittelachse vertikal bzw. normal zur Bodenfläche ausgerichtet sind.

Um das Material nach einer gewissen Verweilzeit aus dem Aufnahmebehälter auszubringen, ist vorgesehen, dass zumindest eine Schnecke, vorzugsweise ein Extruder, zum Abtransport des Materiales aus dem Aufnahmebehälter vorgesehen ist, deren Gehäuse mit einer Einzugsöffnung an eine Austragöffnung des Aufnahmebehälters, beispielsweise radial oder tangential, angeschlossen ist, wobei die Austragöffnung in der Seitenwand nahe der Bodenfläche des Aufnahmebehälter angeordnet ist.

Die Zufuhrmittel können als passive Zufuhrmittel, beispielsweise als bloße Durchgangsöffnungen, ausgebildet sein, durch die das Spülmedium lediglich passiv, beispielsweise durch Unterdruck im Schneidverdichter ins Innere des Schneidverdichters eingesaugt wird. Die Zufuhrmittel können aber auch als aktive Zufuhrmittel, beispielsweise als Düsen od. dgl. ausgebildet sein, durch die das Spülmedium beispielsweise mit Pumpen, Gebläsen etc. mit Überdruck aktiv ins Innere des Schneidverdichters eingeblasen, eingedüst oder eingepumpt werden kann.

Ebenso können die Abfuhrmittel als passive Abfuhrmittel ausgebildet sein, durch die das Spülmedium lediglich durch Überdruck im Aufnahmebehälter forciert, durchtritt oder als beispielsweise über Saugpumpen beaufschlagte, aktive Abfuhrmittel.

Zur Regulierung der Zufuhr bzw. -abfuhr des Spülmediums können die Zufuhr- und/oder Abfuhrmittel zumindest teilweise verschließbar bzw. ansteuerbar sein.

Die Erfindung wird im Folgenden anhand von besonders vorteilhaften, aber nicht einschränkend zu verstehenden Ausführungsbeispielen beschrieben, die in den Zeichnungen schematisch dargestellt sind.
Fig. 1 zeigt einen Vertikalschnitt durch eine erfindungsgemäße Vorrichtung gemäß einem ersten Ausführungsbeispiel.
Fig. 2 zeigt eine weitere Ausführungsform in Draufsicht.
Fig. 3 zeigt ein Detail einer weiteren Ausführungsform in vergrößerter Ansicht.
Fig. 4 zeigt ein weiteres Ausführungsbeispiel im Vertikalschnitt.

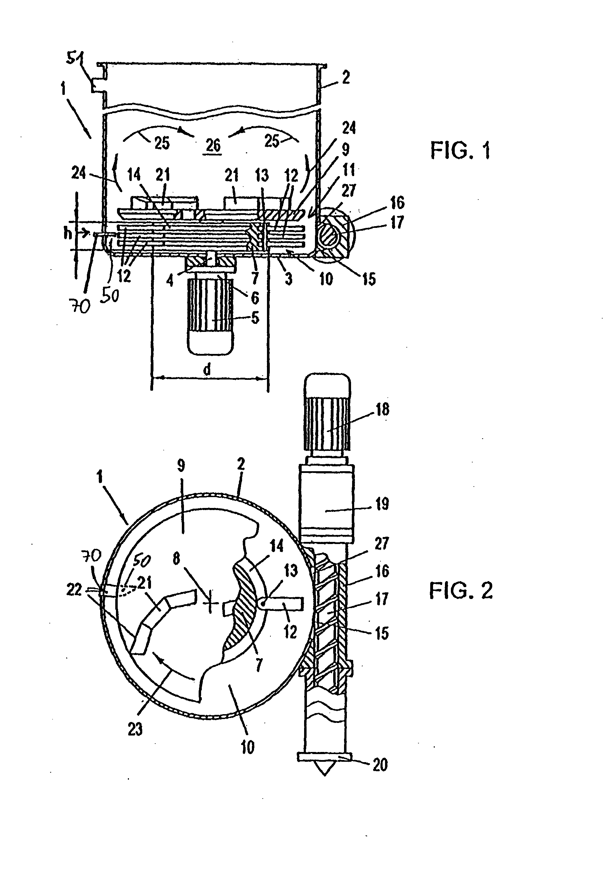

Bei der exemplarischen Ausführungsform nach Fig. 1 besitzt die Vorrichtung einen Aufnahmebehälter bzw. Schneidverdichter, im folgenden Behälter 1 genannt, für das zu verarbeitende, insbesondere thermoplastische, Kunststoffmaterial, das in diesen Behälter 1 von oben mittels einer nicht dargestellten Fördereinrichtung, z.B. eines Förderbandes, eingebracht wird. Das zugeführte Kunststoffmaterial kann vorzerkleinert und/oder vorgetrocknet sein.

Der Behälter 1 ist zylindrisch topfförmig mit vertikalen Seitenwänden 2 und einer horizontalen ebenen Bodenfläche 3 mit Kreisquerschnitt. Der Behälter 1 kann oben dicht geschlossen und evakuierbar oder offen sein. Eine Welle 4 durchsetzt, abgedichtet gelagert, die Bodenfläche 3 und hat eine vertikale Achse 8, die mit der Behälterachse zusammenfällt. Die Welle 4 ist durch einen unterhalb der Bodenfläche 3 angeordneten Motor 5 mit Getriebe 6 zur Drehbewegung angetrieben.

Im Behälter 1 sind mit der Welle 4 ein Rotor 7 und eine darüber angeordnete Trägerscheibe 9 drehschlüssig verbunden. Der Rotor 7 ist von einem kreiszylindrischen Block gebildet, dessen axiale Erstreckung h wesentlich größer ist als jene der flachen Trägerscheibe 9, dessen radiale Erstreckung d jedoch wesentlich kleiner ist als jene der Trägerscheibe 9. Auf diese Weise wird unterhalb der Trägerscheibe 9 ein freier Raum 10 gebildet, der mit dem oberhalb der Trägerscheibe 9 befindlichen Raum 26 des Behälters 1 über einen Ringspalt 11 in freier Strömungsverbindung für das bearbeitete Material steht, der zwischen dem Umfang der Trägerscheibe 9 und der Seitenwand 2 des Behälters 1 besteht. Durch diesen freien Ringspalt 11 kann das behandelte Kunststoffgut aus dem oberen Raum 26 ungehindert in den darunterliegenden ringförmigen Raum 10 gelangen.

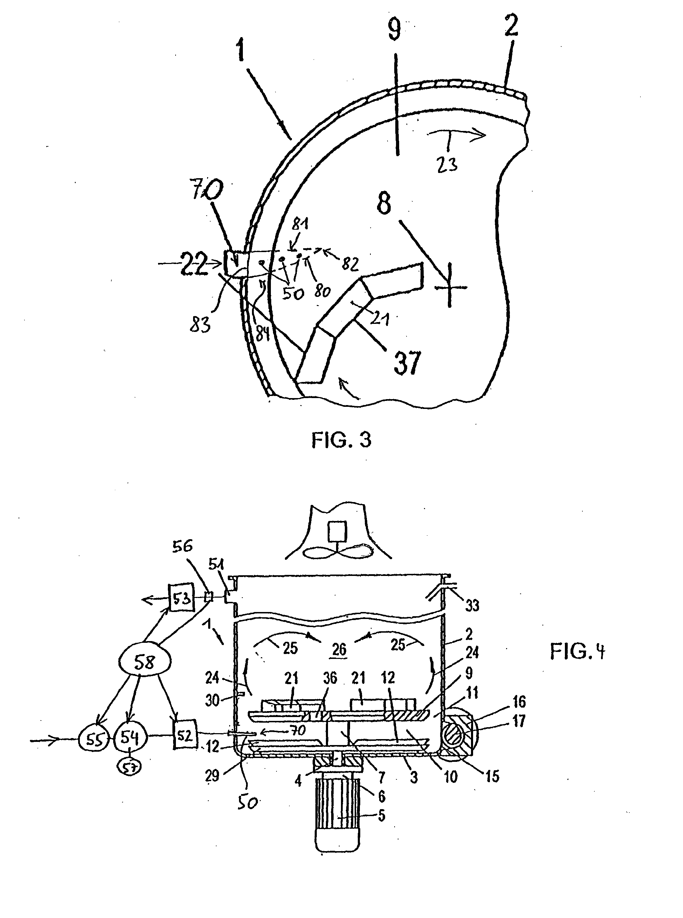

Die obere Trägerscheibe 9 trägt an ihrer Oberseite fest angeordnete obere Mischwerkzeuge 21, welche das im Raum 26 des Behälters 1 befindliche Material mischen und/oder zerkleinern und/oder erwärmen. Für eine wirksame Zerkleinerung können die Werkzeuge 21 mit Schneidkanten 22 ausgebildet sein, die entgegen der Umlaufrichtung der Trägerscheibe 9 (Pfeil 23) gekrümmt oder abgewinkelt, wie dies beispielsweise bei der Ausführungsform der Fig. 2 oder 3 der Fall ist, ausgebildet sein können, um einen ziehenden Schnitt zu erreichen.

Im Betrieb ergibt sich beim Umlauf der Trägerscheibe 9 durch den Einfluss der Werkzeuge 21 ein Umlauf der in den Behälter 1 eingebrachten Kunststoffmasse, wobei das bearbeitete Material entlang der Seitenwand 2 des Behälters 1 im Raum 26 hochsteigt (Pfeile 24) und im Bereich der Behälterachse wieder nach unten zurückfällt (Pfeile 25). Die so entstehende Mischthrombe durchwirbelt das eingebrachte Material, sodass ein guter Mischeffekt erzielt wird.

Das in den Behälter 1 eingebrachte; und dort erforderlichenfalls zerkleinerte, Material gelangt durch den Ringspalt 11 allmählich in den unterhalb der Trägerscheibe 9 liegenden Raum 10 und wird dort durch untere, der Bodenfläche 3 nahe weitere Mischwerkzeuge 12 bearbeitet, die am Rotor 7 mittels vertikaler Bolzen 13 in Ringnuten 14 des Rotors 7 schwenkbar befestigt sind, sodass diese Werkzeuge 12 um die Achsen der Bolzen 13 frei pendeln können. Die freien Enden der unteren Werkzeuge 12 liegen im Abstand von der Seitenwand 2 des Behälters 1. Diese unteren Werkzeuge 12 bewirken durch ihre Schlagwirkung eine zusätzliche Mischung und/oder Zerkleinerung und/oder Erwärmung des im Raum 10 befindlichen Materials.

Durch die von diesen unteren bodennahen Werkzeugen 12 auf das Material ausgeübte Fliehkraft wird das Material in eine Austragsöffnung 15 des Behälters 1 befördert, welche in etwa auf der Höhe der zusätzlichen unteren Werkzeuge 12 liegt und den Raum 10 des Behälters 1 mit einer Einzugsöffnung 27 eines Schneckengehäuses 16 verbindet, in welchem eine Schnecke 17 drehbar gelagert ist, die an ihrem einen Stirnende durch einen Motor 18 mit Getriebe 19 zur Drehbewegung angetrieben ist und das ihr zugeführte Kunststoffmaterial am anderen Stirnende, z.B. durch einen Extruderkopf 20, ausdrückt. Es kann sich dabei um eine Einfachschnecke, um eine Doppelschnecke oder um eine Mehrfachschnecke handeln. Wie ersichtlich, ist das Schneckengehäuse 16 annähernd tangential an den Behälter angeschlossen, so dass Umlenkungen des durch die Schnecke 16 plastifizierten Kunststoffmaterials im Bereich seines Austrittes aus dem Gehäuse 16 vermieden werden. Stattdessen kann die Schnecke 17 auch eine reine Förderschnecke sein, welche das im Behälter 1 aufbereitete Material der weiteren Verwendung zuführt, z.B. einem Extruder.

Im Betrieb stellt sich nach einer kurzen Einlaufzeit ein Gleichgewichtszustand zwischen dem von der Schnecke abtransportierten Material und dem durch den Ringspalt 11 von oben in den Raum 10 eintretenden Material ein. Dies hat zur Folge, dass es sehr unwahrscheinlich ist, dass ein in den Behälter 1 eingebrachtes Kunststoffteilchen in das Schneckengehäuse 16 gelangt, ohne zuvor eine ausreichende Verweilzeit im Behälter 1 verbracht zu haben. Dadurch wird eine genügende Bearbeitung aller Kunststoffteilchen durch die Mischwerkzeuge 12, 21 sichergestellt, sodass das von der Schnecke 17 abgeführte Material eine zumindest annähernd gleichmäßige Beschaffenheit aufweist, insbesondere hinsichtlich der Temperatur und der Größe der Kunststoffteilchen. Dies bedeutet, dass die von der Schnecke 17 oder der angeschlossenen Extruderschnecke aufzubringende Plastifizierarbeit vergleichsweise gering ist, sodass hohe thermische Spitzenbeanspruchungen auf das Kunststoffmaterial bei der Plastifizierarbeit entfallen. Dadurch wird das Kunststoffmaterial geschont und an Antriebsenergie für die Schnecke 17 bzw. die Extruderschnecke wesentlich gespart.

Wie eingangs erwähnt, ist das in den Behälter 1 eingebrachte Material in der Regel nicht völlig trocken und/oder es weist Verunreinigungen auf, die bei der Verarbeitung im Behälter flüchtige Substanzen abgeben, z.B. Wasserdampf, Abspaltprodukte aus dem bearbeitenden Material, verdampftes Kühlmittel, flüchtige Substanzen aus Einfärbungs- und/oder Bedruckungsmaterial usw.. Um diese Störsubstanzen effektiv zu entfernen bzw. um zu vermeiden, dass sich diese flüchtigen Substanzen beispielsweise im Raum 10 unter der oberen Trägerscheibe 9 ansammeln und dadurch den Durchtritt von bearbeitetem Material aus dem Raum 26 in den Raum 10 behindern und/oder in das Innere des Schneckengehäuses 16 gelangen, ist im unteren Bereich der Seitenwand 2 des Aufnahmebehälters 1 eine ins Innere des Behälters 1 hineinragende Lanze 70 angeordnet. Auf dieser Lanze 70 sind mehrere Zufuhrmittel 50 in Form von Öffnungen oder Düsen angeordnet, über die ein Spülmedium, z.B. ein Gas, von einem Bereich außerhalb des Behälters 1 mit Druck ins Innere des Behälters 1 eingeblasen werden kann. Die Zufuhrmittel 50 sind als singuläre Öffnungen in der Oberfläche 83 der Lanze 70 ausgebildet und weisen jeweils einen Durchmesser von etwa 20 mm auf. Nähere Details zur Lanze 70 werden bei Fig. 3 beschrieben.

Die Lanze 70 ist lagefest in der Seitenwand 2 im Bereich unterhalb der oberen Mischwerkzeuge 21 bzw. der oberen Trägerscheibe 9 angeordnet und mündet somit in den unteren Innenraumteil 10 ein.

Die Lanze 70 ist in einer solchen Höhe bzw. in einem solchen Abstand zur Bodenfläche 3 angeordnet, dass sie ständig unterhalb des verfahrensmäßig vorgegebenen Füllstandes der im Schneidverdichter 1 befindlichen bzw. rotierenden Materialteilchen bzw. des Niveaus der bei der Bewegung bzw. Rotation der Materialteilchen ausgebildeten Mischthrombe liegt. Die Lanze 70 liegt zudem im Bereich des unteren Drittels der Gesamthöhe des Schneidverdichters 1.

In der Ausführungsform von Fig. 1 erstreckt sich die Lanze 70 von der Seitenwand 2 bis knapp vor die äußersten freien Enden der Mischwerkzeuge 12.

Es können zusätzlich auch weitere Lanzen 70 auf derselben Höhe, insbesondere gleichmäßig über den Umfang verteilt ausgebildet sein.

Im Bereich oberhalb des Materiallevels ist ein Abfuhrmittel 51 in Form einer aktiven Gasabsaugung bzw. einer Saugpumpe 53 vorgesehen. Alternativ kann das Abfuhrmittel 51 auch als passives Abfuhrmittel ausgebildet sein.

Durch die Zufuhrmittel 50 wird somit trockene, erwärmte Luft mit Druck ins Innere des Behälters 1 geblasen. Diese Luft wird durch die entstehende Zwangsströmung nach oben durch das bewegte Material geführt und nimmt die vorhandene Feuchtigkeit auf bzw. reißt die Störstoffe mit. Über die Absaugung 51 verlässt die mit Störstoffen angereicherte Luft den Aufnahmebehälter 1. Zurück bleibt ein von Störstoffen nahezu befreites Restmaterial. Auf diese Weise kann durch das vorteilhafte synergistische Zusammenwirken der Gasführung 50,51, der beiden Mischwerkzeuge 12,21 und gegebenenfalls eines Durchbruches 36 das Material nahezu vollständig von störenden Substanzen befreit werden.

Fig. 2 zeigt eine Vorrichtung die sehr ähnlich wie die Vorrichtung in Fig. 1 ist. Allerdings stehen die unteren bodennahen Mischwerkzeuge 12 nicht so eng und dicht übereinander und kann die Lanze 70 dadurch teilweise zwischen zwei übereinanderliegenden Ebenen von Mischwerkzeugen 12 angeordnet werden bzw. abschnittsweise hineinragen. Der strichliert gekennzeichnete vordere Abschnitt der Lanze 70 ist in der Draufsicht von Fig. 2 teilweise durch die obere Trägerscheibe 9 verdeckt. Dadurch kann sich die Lanze 70 auch weiter nach innen erstrecken, im vorliegenden Fall besitzt sie eine Länge von etwa 20 % des Radius. Die Lanze 70 erstreckt sich somit über den äußersten Flugkreis der Mischwerkzeuge 12 hinaus, womit das Spülmedium noch weiter nach innen gebracht werden kann, als bei Fig. 1.

Fig. 3 zeigt ein Detail einer weiteren vorteilhaften Ausführungsform in vergrößerter Ansicht. Eine Lanze 70, wie sie hier dargestellt ist, ist in allen Vorrichtungen der Fig. 1, 2 oder 4 einsetzbar.

Die in Fig. 3 gezeigte exemplarische Lanze 70 ist im Wesentlichen plattenförmig mit relativ geringer Dicke. Die Lanze 70 besitzt eine nach oben weisende Oberfläche 83 und eine nach unten in Richtung der Bodenfläche 3 weisende Unterfläche 84. Die Oberfläche 83 ist parallel zur Unterfläche 84 und zur Bodenfläche 3 ausgerichtet. Die Lanze 70 besitzt von oben betrachtet die Grundform einer Haifischflosse bzw. Shark-Fin. Die dem entgegenströmenden Material zugewendete Vorderkante 80 ist gekrümmt. Die stromabwärts gelegene Hinterkante 81 verläuft bei Fig. 3 gerade, kann aber ebenfalls, wie bei einer Haifischflosse, analog gekrümmt sein. Die Vorderkante 80 und die Hinterkante 81 laufen in einer Spitze 82 zusammen.

Die Vorderkante 80 ist nicht stumpf oder gerade, sondern gerundet ausgebildet, um geringeren Strömungswiderstand gegen die in Pfeilrichtung 23 entgegenlaufenden Teilchen zu bieten.

Die Lanze 70 erstreckt sich über eine Länge gemessen von der Seitenwand 2 bis zur Spitze 82 von etwa 30 bis 35 % ins Innere des Aufnahmebehälters 1. Das am weitest innen bzw. am weitesten von der Seitenwand beabstandet gelegene, in Fig. 3 rechteste, Zufuhrmittel 50 ist zur Seitenwand 2 etwa in einem radialen Abstand von 20 bis 25 % des Radius des Behälters beabstandet. Auf diese Weise kann das Spülmedium bzw. Gas weit nach innen gebracht werden.

Die Lanze 70 kann dabei drehbar an der Seitenwand 2 befestigt sein, um den Neigungswinkel zu verstellen und an besondere Strömungsverhältnisse optimal angepasst zu werden.

Die Lanze 70 ist nicht ganz radial nach innen gerichtet bzw. so ausgerichtet, dass eine gedachte Verlängerung nach innen ablaufseitig an der Drehachse 8 vorbei geht.

Die Lanze 70 befindet sich unterhalb einer Trägerscheibe 9, auf der die Mischwerkzeuge 21 angeordnet sind. Aus diesem Grund ist der vorderste Teil der Lanze von der Trägerscheibe 9 verdeckt und strichliert eingezeichnet.

Auf der Oberfläche 83 der Lanze 70 sind drei Zufuhrmittel 50 ausgebildet, die in einer im Wesentlichen parallel zur Vorderkante 80 verlaufenden Reihe angeordnet sind. Es handelt sich dabei um voneinander beabstandete Öffnungen oder Düsen, die bündig mit der Oberfläche 83 abschließen. Auf der gegenüberliegenden Unterfläche 84 sind ebenfalls Zufuhrmittel 50 ausgebildet. Die Lanze 70 ist in ihrem Inneren hohl bzw. besitzt einen Kanal oder Hohlraum, der mit einem Bereich außerhalb des Aufnahmebehälters 1 verbunden ist. Über diesen Kanal oder Hohlraum wird das Spülmedium ins Innere der Lanze 70 eingebracht und gelangt zu den Zufuhrmitteln 50 und in weiterer Folge ins Innere des Aufnahmebehälters 1.

Eine alternative Ausführungsform gemäß Fig. 4 unterscheidet sich von jener nach den Fig. 1 und 2 vor allem dadurch, dass die unteren bodennahen Mischwerkzeuge 12 nicht pendelnd aufgehängt sind, sondern starr auf einer weiteren unteren Trägerscheibe 29 sitzen, die koaxial zur Trägerscheibe 9 angeordnet ist und über die gleiche Welle 4 zur Drehbewegung angetrieben sein kann. Dadurch kann der Rotor 7 schmäler ausgebildet werden oder als Verlängerung der Welle 4 zur Gänze entfallen. Wie bei den Ausführungsformen gemäß Fig. 1 und 2 sind die unteren Mischwerkzeuge 12 auf der Höhe der Austragsöffnung 15 des Behälters 1 angeordnet, um das im Raum 10 befindliche, bearbeitete Kunststoffmaterial wirksam in die Einzugsöffnung 27 des Schneckengehäuses 16 fördern zu können. Der Bereich unterhalb der unteren Trägerscheibe 29 ist sehr klein.

Wie bereits in Fig. 1 und 2 dargestellt, ist die Lanze 70 zwischen den Trägerscheiben 9,29 bzw. zwischen den oberen und den unteren Mischwerkzeugen 21,12 angeordnet und mündet in den, nunmehr größeren, freien Raum 10 ein. Die Lanze 70 erstreckt sich bis in eine Tiefe von etwa 20 % des Radius nach innen.

Es ist zweckmäßig, die Temperatur des im Behälter 1 verarbeiteten Materiales zu überwachen. Hierzu ist, wie Fig. 4 zeigt, im oberen Schneidraum 26 oberhalb der Trägerscheibe 9 eine Temperaturmesseinheit 30 und eine Kühleinrichtung 33 vorgesehen. Die Abfuhr der in den oberen Schneidraum 26 eintretenden flüchtigen Störsubstanzen kann durch eine Absaugeinrichtung 51 unterstützt werden. Im Weg des aus dem Behälter 1 austretenden Gases ist eine Messeinrichtung 56 angeordnet, mit der die Temperatur des austretenden Gases und/oder dessen Feuchtigkeit und/oder der Gehalt der Störstoffe in diesem Gas festgestellt werden kann. Mittels einer schematisch dargestellten Steuereinrichtung 58 kann die Vorrichtung bzw. deren Einzelelemente gesteuert bzw. eingeregelt werden. Im vorliegenden Fall ist die Steuereinrichtung 58 mit den Abfuhrmitteln 51 und den Zufuhrmitteln 50 verbunden. Im Weg des zugeführten Gases liegen eine Heizeinrichtung 54 sowie eine Gastrocknungseinrichtung 55 und eine Pump- oder Gebläseeinrichtung 52. Mit diesen Einheiten kann unter Einwirkung der Steuereinrichtung 58 die Menge bzw. die Temperatur bzw. der Druck des zugeführten Gases geregelt werden. Es ist auch möglich, die Temperatur bzw. Feuchte des austretenden Gases zur Regelung der Temperatur und/oder Menge und/oder des Druckes des zugeführten Gases heranzuziehen.

In Fig. 4 hat die Trägerscheibe 9 zusätzlich mindestens einen, vorzugsweise jedoch mehrere Durchbrüche 36, welche den Raum 26 oberhalb der Trägerscheibe 9 mit dem unter ihr befindlichen Raum 10 verbinden. Durch diese Durchbrüche 36 können die im Raum 10 eingesperrten flüchtigen Substanzen durch die Trägerscheibe 9 hindurch nach oben entweichen und so aus dem Behälter 10, beispielsweise durch eine Absaugung 51, abgeführt werden. Die Durchbrüche 36 sind optional und unterstützen die Reinigung zusätzlich, können jedoch auch weggelassen werden. Die Durchbrüche 36 können von in einem Querschnitt kreisförmigen oder geschlitzten Bohrungen gebildet sein. Zumindest einige dieser Durchbrüche 36 sind nahe der Achse 8 des Behälters 1 angeordnet, und zwar unmittelbar hinter den Werkzeugen 21, so dass die Durchbrüche 36, gesehen in Umlaufrichtung (Pfeil 23) der Trägerscheibe 9, den nachlaufenden Rändern bzw. Kanten der Werkzeuge 21 benachbart liegen. Die von den Werkzeugen 21 bei ihrem Umlauf an ihrer nachlaufenden Kante hervorgerufene Saugwirkung unterstützt die Absaugung der flüchtigen Substanzen durch die Durchbrüche 36 nach oben.

Eine weitere vorteilhafte, jedoch nicht dargestellte, Ausführungsform weist einen Behälter 1 auf, in dem lediglich eine einzige Trägerscheibe 9,29 mit Mischwerkzeugen 12,21 im unteren Bereich knapp über der Bodenfläche 3 in Höhe der Austragsöffnung 15 vorgesehen ist. Die Mischwerkzeuge 12,21 erzeugen eine Bewegung der Materialteichen bzw. eine Mischthrombe 25. In der Seitenwand 2 des Behälters 1 und zwar auf der Höhe, in der durch die bewegten Materialteichen der höchste Druck auf die Seitenwand 2 ausgeübt wird, ist eine Lanze 70 angeordnet, über die Spülgas ins Innere des Behälters 1 eingeblasen wird.

## Patentansprüche

1. Verfahren zur Aufbereitung und Reinigung eines Polymermaterials, wobei das stückig und nicht geschmolzen vorliegende Polymermaterial in einem Aufnahmebehälter (1) durch zumindest ein Misch- und/oder Zerkleinerungswerkzeug (12,21) bewegt und erwärmt wird, und wobei, zur Entfernung unerwünschter Störstoffe, die die Aufbereitung oder die weitere Bearbeitung des Materials beeinträchtigen, ein Spülmedium in einem Bereich unterhalb des Niveaus des im Betrieb im Aufnahmebehälter (1) befindlichen Materials bzw. unterhalb des Materiallevels der sich ausbildenden Mischthrombe ins Innere des Aufnahmebehälters (1) eingebracht wird, wobei das Spülmedium unter Ausbildung einer Zwangsströmung zumindest durch einen Teilbereich des Materials durchgeführt wird und wobei anschließend das nun mit Störstoffen angereicherte bzw. gesättigte Spülmedium in einem Bereich oberhalb des Niveaus des im Betrieb im Aufnahmebehälter (1) befindlichen Materials bzw. oberhalb des Materiallevels der Mischthrombe aus dem Aufnahmebehälter (1) ausgebracht wird, *wobei* das Spülmedium in den Aufnahmebehälter (1) über zumindest ein Zufuhrmittel (50) eingebracht wird, das auf zumindest einer von einer Seitenwand (2) des Aufnahmebehälters (1) in den Innenraum des Aufnahmebehälters (1) hineinragenden Lanze (70) angeordnet ist, **dadurch gekennzeichnet, dass** die Lanze (70) im Wesentlichen plattenförmig bei verhältnismäßig geringer Dicke ist, mit einer nach oben weisenden, gegebenenfalls parallel zur Bodenfläche (3) ausgerichteten, Oberfläche (83) und einer nach unten weisenden gegenüberliegenden, vorzugsweise parallel zur Oberfläche (83) ausgerichteten, Unterfläche (84).

2. Verfahren nach Anspruch 1, **dadurch gekennzeichnet, dass** das Spülmedium im Bereich des unteren Drittels der Höhe des Aufnahmebehälters (1) in den Aufnahmebehälter (1) eingebracht wird und/oder dass das Spülmedium im Bereich unterhalb des bodennächsten Mischwerkzeuges (12,21) in den Aufnahmebehälter (1) eingebracht wird und/oder dass das Spülmedium bei Vorliegen von zwei oder mehr übereinanderliegenden Mischwerkzeugen (12,21) im Bereich zwischen den Mischwerkzeugen (12,21) in den Aufnahmebehälter (1) eingebracht wird.

3. Verfahren nach einem der Ansprüche 1 oder 2, **dadurch gekennzeichnet, dass** das Spülmedium in demjenigen Bereich des Behälters (1) eingebracht wird, in dem die im Aufnahmebehälter (1) bewegten bzw. rotierenden Materialteilchen den höchsten Druck auf die Seitenwand (2) des Aufnahmebehälter (1) ausüben.

4. Verfahren nach einem der Ansprüche 1 bis 3, **dadurch gekennzeichnet, dass** das Spülmedium ein gasförmiges Medium, insbesondere Luft oder ein Inertgas ist und/oder vor der Zufuhr erwärmt und/oder getrocknet wird und/oder dass das Polymermaterial im Aufnahmebehälter (1) in Form von thermoplastischen Polymerteilchen bzw. -flakes vorliegt und das Polymermaterial permanent stückig bzw. teilchenförmig, erweicht, jedoch nicht geschmolzen ist.

5. Verfahren nach einem der Ansprüche 1 bis 4, **dadurch gekennzeichnet, dass** das Polymermaterial über eine Schnecke (17) deren Gehäuse (16) mit einer Einzugsöffnung (27) an eine Austragöffnung (15) des Aufnahmebehälters (1) angeschlossen ist, vorzugsweise über einen Extruder, ausgebracht wird, wobei die Austragöffnung (15) in der Seitenwand (2) nahe der Bodenfläche (3) des Aufnahmebehälter (1) angeordnet ist.

6. Vorrichtung zur Durchführung des Verfahrens nach einem der Ansprüche 1 bis 5, mit zumindest einem Aufnahmebehälter (1), in dem zumindest ein um eine Achse (8) drehbares, Mischwerkzeug (12,21) angeordnet ist, mit dem im Betrieb ein im Inneren des Aufnahmebehälters (1) vorgelegtes Polymermaterial bewegt, gemischt, erwärmt und gegebenenfalls zerkleinert wird, wobei im Aufnahmebehälter (1) unterhalb des Niveaus des im Betrieb im Aufnahmebehälter (1) befindlichen Materials bzw. unterhalb des Materiallevels einer sich im Betrieb ausbildenden Mischthrombe zumindest ein Zufuhrmittel (50) für den Eintritt eines Spülmediums ins Innere des Aufnahmebehälters (1) vorgesehen ist, *wobei* an einer Seitenwand (2) des Aufnahmebehälters (1) zumindest eine von der Seitenwand (2) nach innen ragende Lanze (70) angeordnet ist und das Zufuhrmittel (50) auf der Lanze (70) angeordnet ist, **dadurch gekennzeichnet, dass** die Lanze (70) im Wesentlichen plattenförmig bei verhältnismäßig geringer Dicke ist, mit einer nach oben weisenden, gegebenenfalls parallel zur Bodenfläche (3) ausgerichteten, Oberfläche (83) und einer nach unten weisenden gegenüberliegenden, vorzugsweise parallel zur Oberfläche (83) ausgerichteten, Unterfläche (84).

7. Vorrichtung nach Anspruch 6, **dadurch gekennzeichnet, dass** die Lanze (70) parallel zum Mischwerkzeug (12,21) oder normal zur Achse (8) ausgerichtet ist und/oder dass die Lanze (70) im Wesentlichen radial nach innen gerichtet ist.

8. Vorrichtung nach einem der Ansprüche 6 oder 7, **dadurch gekennzeichnet, dass** die Lanze (70) bzw. die Oberfläche (83) die Form einer Haifischflosse aufweist, mit einer zur Bewegungs- bzw. Drehrichtung des Mischwerkzeugs (12,21) weisenden gekrümmten, und vorzugsweise gerundeten, Vorderkante (80) und einer stromabwärts gelegenen geraden oder gekrümmten Hinterkante (81), wobei die Vorderkante (80) und die Hinterkante (81) vorzugsweise zu einer Spitze (82) zusammenlaufen.

9. Vorrichtung nach einem der Ansprüche 6 bis 8, **dadurch gekennzeichnet, dass** die Zufuhrmittel (50) als einzelne, singuläre Öffnungen oder Düsen, vorzugsweise mit einem Durchmesser jeweils zwischen 10 und 30 mm, ausgebildet sind und/oder dass die Zufuhrmittel (50,50a,50b) bündig mit der Außenfläche der Lanze (70) abschließen und/oder dass die Zufuhrmittel (50) sowohl auf der Oberfläche (83) als auch auf der Unterfläche (84) ausgebildet oder angeordnet sind.

10. Vorrichtung nach einem der Ansprüche 6 bis 9, **dadurch gekennzeichnet, dass** die Zufuhrmittel (50), gegebenenfalls ausschließlich, in bzw. auf der Hinterkante (81) ausgebildet oder angeordnet sind und/oder dass auf jeder Lanze (70) mehrere Zufuhrmittel (50), vorzugsweise in parallel zur Vorderkante (80) oder Hinterkante (81) verlaufenden Reihen, ausgebildet oder angeordnet sind, insbesondere 3 bis 8 Öffnungen, wobei die Gesamtöffnungsfläche aller auf einer oder allen Lanzen (70) ausgebildeten Öffnungen vorzugsweise zwischen 380 mm² und 6000 mm² liegt.

11. Vorrichtung nach einem der Ansprüche 6 bis 10, **dadurch gekennzeichnet, dass** die Lanze (70) unterhalb des untersten bodennächsten Mischwerkzeuges (12) angeordnet ist und/oder dass die Lanze (70) im Bereich des unteren Drittels der Höhe des Aufnahmebehälters (1) angeordnet ist und/oder dass im Aufnahmebehälter (1) zumindest zwei übereinander angeordnete Mischwerkzeuge (12,21) vorgesehen sind und die Lanze (70) im Bereich, vorzugsweise mittig, zwischen den Mischwerkzeugen (12,21) angeordnet ist und/oder dass die Lanze (70) in demjenigen Bereich der Seitenwand (2) des Behälters (1) angeordnet ist, in dem die im Behälter (1) bewegten bzw. rotierenden Materialteilchen den höchsten Druck auf die Seitenwand (2) des Behälters (1) ausüben.

12. Vorrichtung nach einem der Ansprüche 6 bis 11, **dadurch gekennzeichnet, dass** mehrere Lanzen (70) vorgesehen sind, die auf gleicher Höhe über den Umfang der Seitenwand (2) des Aufnahmebehälters (1), vorzugsweise regelmäßig verteilt, angeordnet sind.

13. Vorrichtung nach einem der Ansprüche 6 bis 12, **dadurch gekennzeichnet, dass** die Lanze (70) hohl ist oder dass in der Lanze (70) ein Kanal oder Hohlraum ausgebildet ist, der mit einem Bereich außerhalb des Aufnahmebehälters (1) in Fluidverbindung steht, wodurch das Spülmedium einbringbar ist und zum Zufuhrmittel (50) strömen kann.

14. Vorrichtung nach einem der Ansprüche 6 bis 13, **dadurch gekennzeichnet, dass** sich die Lanze (70) zumindest über einen Länge von größer gleich 10 %, vorzugsweise 20 %, des Radius des Aufnahmebehälters (1) erstreckt und/oder dass das am weitest innen gelegene Zufuhrmittel (50) jeder Lanze (70) einen radialen Abstand zur Seitenwand (2) von größer gleich 10 %, vorzugsweise 20 %, des Radius des Aufnahmebehälters (1) aufweist.

15. Vorrichtung nach einem der Ansprüche 6 bis 14, **dadurch gekennzeichnet, dass** die Lanze (70) drehbar an der Seitenwand (2) befestigt ist bzw. der Neigungs- bzw. Anstellungswinkel der Lanze (70) bzw. der Winkel der Oberfläche (83) zur Bodenfläche (3) verstellbar ist.

16. Vorrichtung nach einem der Ansprüche 6 bis 15, **dadurch gekennzeichnet, dass** im Aufnahmebehälter (1) oberhalb des Niveaus des im Betrieb im Aufnahmebehälter (1) befindlichen Materials bzw. oberhalb des Materiallevels der Mischthrombe zumindest ein Abfuhrmittel (51) für den Austritt des mit Störstoffen angereicherten bzw. gesättigten Spülmediums aus dem Aufnahmebehälter (1) vorgesehen ist, beispielsweise eine Öffnung im Behälterdeckel oder der Behälterwand.

17. Vorrichtung nach einem der Ansprüche 6 bis 16, **dadurch gekennzeichnet, dass** der Aufnahmebehälter (1) im Wesentlichen zylindrisch mit einer ebenen Bodenfläche (3) und einer dazu vertikal ausgerichteten zylindermantelförmigen Seitenwand (2) ist und/oder die Drehachse (8) mit der zentralen Mittelachse des Aufnahmebehälters (1) zusammenfällt und/oder die Drehachse (8) oder die zentrale Mittelachse vertikal bzw. normal zur Bodenfläche (2) ausgerichtet sind.

18. Vorrichtung nach einem der Ansprüche 6 bis 17, **dadurch gekennzeichnet, dass** zumindest eine Schnecke (17), vorzugsweise ein Extruder, zum Abtransport des Materiales aus dem Aufnahmebehälter (1) vorgesehen ist, deren Gehäuse (16) mit einer Einzugsöffnung (27) an eine Austragöffnung (15) des Aufnahmebehälters (1), beispielsweise radial oder tangential, angeschlossen ist, wobei die Austragöffnung (15) in der Seitenwand (2) nahe der Bodenfläche (3) des Aufnahmebehälter (1) angeordnet ist.

## Claims

1. A method of processing and purifying a polymer material, in which the polymer material, which is present in a lumpy and non-melted form, is agitated and heated in a receiving container (1) by at least one mixing and/or crushing tool (12, 21), and wherein, for removing undesired contaminants impairing processing or further treatment of the material, a rinsing medium is introduced into the inside of the receiving container (1) in an area below the level of the material that is present in the receiving container (1) during operation, i.e. below the material level of the forming mixing drum, wherein the rinsing medium is passed through at least a partial area of the material by creating a forced flow and wherein the rinsing medium now enriched and/or saturated with contaminants is then discharged from the receiving container (1) in an area above the level of the material present in the receiving container during operation, i.e. above the material level of the mixing drum, wherein the rinsing medium is introduced into the receiving container (1) via at least one delivery means arranged on at least one lance (70) protruding into the interior space of the receiving container (1) from a side wall (2), **characterized in that** the lance (70) is essentially plate-shaped at a relatively low thickness, having a top surface (83) pointing upwards, optionally in parallel orientation with the floor surface (3) and an opposite bottom surface (84) pointing downwards, preferably oriented in parallel with the top surface (83).

2. The method of Claim 1, **characterized in that** the rinsing medium is introduced into the receiving container (1) in the area of the lower third of the level of the receiving container (1) and/or that the rinsing medium is introduced into the receiving container (1) in the area below the mixing tool (12, 21) which is closest to the floor and/or that the rinsing medium is introduced into the receiving medium (1) in the area between the mixing tools (12, 21) when two or more superimposed mixing tools (12, 21) are present.

3. The method of any one of Claims 1 or 2, **characterized in that** the rinsing medium is introduced into that area of the container (1) in which the material particles moved and/or rotated within the receiving container (1) exert the highest pressure on the side wall (2) of the receiving container.

4. The method of any one of Claims 1 to 3, **characterized in that** the rinsing medium is a gaseous medium, in particular air or an inert gas and/or that it is heated and/or dried prior to delivery and/or that the polymer material is present in the receiving container (1) in the form of thermoplastic polymer particles and/or flakes, and that the polymer material is permanently lumpy and/or particulate, softened but not melted.

5. The method of any one of Claims 1 to 4, **characterized in that** the polymer material is discharged via a screw conveyor (17), the housing (16) of which having a feeder opening (27) is connected to a discharge opening (15) of the receiving container (1), preferably via an extruder, wherein the discharge opening (15) is arranged in the side wall (2) close to the floor surface (3) of the receiving container (1).

6. A device for performing the method of any one of Claims 1 to 5, having at least one receiving container (1), in which a mixing tool (12, 21) rotatable around an axis (8) is arranged, by which, during operation, a polymer material provided inside a receiving container (1) is agitated, mixed, heated and optionally grinded, wherein at least one delivery means (50) for a rinsing medium to enter into the receiving medium (1) is provided in the receiving container below the level of the material present in the receiving container (1) during operation, i.e. below the material level of a mixing drum forming during operation, wherein at least one lance (70) protruding into the interior space of the receiving container (1) from a side wall (2) is arranged on said side wall (2) of the receiving container (1) and the delivery means (50) is arranged on the lance (70), **characterized in that** the lance (70) is essentially plate-shaped at a relatively low thickness, having a top surface (83) pointing upwards, optionally in parallel orientation with the floor surface (3) and an opposite bottom surface (84) pointing downwards, preferably oriented in parallel with the top surface (83).

7. The device of Claim 6, **characterized in that** the lance (70) is oriented in parallel with the mixing tool (12, 21) or normal to the axis (8) and/or that the lance (70) is essentially radially directed inwards.

8. The device of any one of Claims 6 or 7, **characterized in that** the lance (70) and/or the surface (83) has the shape of a shark fin with a bent and preferably rounded front edge (80) pointing towards the moving and/or rotating direction of the mixing tool (12, 21) and, located downstream, a straight or bent rear edge (81), wherein the front edge (80) and the rear edge (81) preferably coalesce into an apex (82).

9. The device of any of Claims 6 to 8, **characterized in that** the delivery means (50) are formed as individual, singular openings or jets, preferably having a diameter of between 10 and 30 mm each, and/or that the delivery means line up precisely with the exterior surface of the lance (70) and/or that the delivery means (50) are formed or arranged on both the top surface (83) and the bottom surface (84).

10. The device of any of Claims 6 to 9, **characterized in that** the delivery means (50) are formed or arranged, optionally exclusively, in and/or on the rear edge (81) and/or that several delivery means (50) are formed or arranged on each lance, preferably running in lines parallel with the front edge (80) or rear edge (81), in particular 3 to 8 openings, wherein the overall opening surface of all surfaces formed on one or all lances (70) is preferably between 380 mm² and 6,000 mm².

11. The device of any one of Claims 6 to 10, **characterized in that** the lance (70) is arranged below the bottom mixing tool (12) closest to the floor and/or that the lance (70) is arranged in the area of the lower third of the level of the receiving container (1) and/or that at least two superimposed mixing tools (12, 21) are provided in the receiving container (1) and that the lance (70) is arranged in the area, preferably in the center, between the mixing tools (12, 21) and/or that the lance (70) is arranged **in that** area of the side wall (2) of the container (1) in which the material particles moved and/or rotated in the container (1) exert the highest pressure on the side wall (2) of the container (1).

12. The device of any one of Claims 6 to 11, **characterized in that** several lances (70) are provided on the same level over the circumference of the side wall (2) of the receiving container (1), preferably uniformly distributed.

13. The device of any one of Claims 6 to 12, **characterized in that** the lance (70) is hollow or that a duct or cavity is formed within the lance (70), which is in fluid connection with an area outside the receiving container (1), through which the rinsing medium can be introduced and flow towards the delivery means (50).

14. The device of any one of Claims 6 to 13, **characterized in that** the lance (70) extends over a lengths of equal to or more than 10%, preferably 20%, of the radius of the receiving container (1) and/or that the innermost delivery means (50) of each lance (70) has a radial distance to the side wall (2) of equal to or more than 10%, preferably 20%, of the radius of the receiving container (1).

15. The device of any one of Claims 6 to 14, **characterized in that** the lance (70) is rotatably fixed to the side wall (2) and/or that the tilt angle of the lance (70) and/or the angle between the top surface (83) to the floor surface (3) is adjustable.

16. The device of any one of Claims 6 to 15, **characterized in that** at least one removal means (51), for example an opening in the container lid or the container wall, is provided in the receiving container (1) above the level of the material present in the receiving container during operation, i.e. above the material level of the mixing drum, for rinsing medium enriched and/or saturated with contaminants to exit from the receiving container (1).

17. The device of any one Claims 6 to 16, **characterized in that** the receiving container (1) is essentially cylindrical with a plane floor surface (3) and a side wall (2) in the form of a cylindrical casing, oriented vertically with respect to said floor surface and/or that the rotation axis (8) coincides with a central axis of the receiving container (1) and/or that the rotation axis (8) or the central axis is oriented vertically and/or perpendicularly to the floor surface (3).

18. The device of any one of Claims 6 to 17, **characterized in that** at least one screw conveyor (17), preferably an extruder, is provided for transporting the material off the receiving container (1), the housing (16) of the screw conveyor being connected to a discharge opening (15) of the receiving container (1) with its feeder opening (27), for example, radially or tangentially, wherein the discharge opening (15) is arranged in the side wall (2) close to the floor surface (3) of the receiving container (1).

## Revendications

1. Procédé pour la préparation et le nettoyage d'un matériau polymère, ledit matériau polymère en morceaux et non fondu, étant mis en mouvement et chauffé dans une cuve (1) par au moins un outil (12, 21) de malaxage et/ou de fragmentation, un fluide de lavage étant introduit à l'intérieur de la cuve (1) dans une zone en dessous du niveau du matériau situé dans la cuve (1) en fonctionnement, ou en dessous du niveau des grumeaux formés par le malaxage, pour éliminer les matières perturbatrices indésirables qui affectent la préparation ou le traitement ultérieur du matériau, le fluide de lavage étant acheminé, moyennant la formation d'un flux forcé, au moins à travers une zone partielle du matériau et, ensuite, le fluide de lavage, maintenant enrichi ou saturé en matières perturbatrices, étant évacué hors de la cuve (1) dans une zone au-dessus du niveau du matériau situé dans la cuve (1) en fonctionnement ou au-dessus du niveau des grumeaux formés par le malaxage, le fluide de lavage étant introduit dans la cuve (1) par l'intermédiaire d'au moins un moyen (50) d'admission disposé sur au moins une lance (70) qui s'engage à l'intérieur de la cuve (1) à partir d'une paroi latérale (2) de la cuve (1), **caractérisé en ce que** la lance (70) est essentiellement réalisée en forme de plaque et avec une épaisseur relativement réduite, comportant une face (83) supérieure orientée vers le haut, éventuellement parallèle à la face (3) en bas, et une face (84) inférieure orientée vers le bas, de préférence parallèle à la face (83) supérieure.

2. Procédé selon la revendication 1, **caractérisé en ce que** le fluide de lavage est introduit dans la zone du tiers inférieur de la hauteur de la cuve (1) et/ou **en ce que** le fluide de lavage est introduit dans la cuve dans la zone en dessous de le l'outil (12, 21) de malaxage le plus proche du fond et /ou **en ce que** dans le cas de deux ou plus outils (12, 21) malaxage superposés le fluide de lavage est introduit dans la cuve (1) dans la zone entre les outils (12, 21) de malaxage.

3. Procédé selon une des revendications 1 ou 2, **caractérisé en ce que** le fluide de lavage est introduit dans la zone de la cuve (1) dans laquelle les particules du matériau mis en mouvement ou en rotation exercent le maximum de pression sur la paroi (2) latérale de la cuve (1).

4. Procédé selon une des revendications 1 à 3, **caractérisé en ce que** le fluide de lavage est un fluide gazeux, notamment de l'air ou un gaz inerte, et/ou **en ce qu'**il est chauffé et/ou séché avant l'introduction et/ou **en ce que** le matériau polymère dans la cuve (1) est présent sous forme de particules ou flocons polymères thermoplastiques et de façon permanente en morceaux ou en particules, ramolli mais non fondu.

5. Procédé selon une des revendications 1 à 4, **caractérisé en ce que** le matériau polymère est évacué par l'intermédiaire d'une vis (17), dont la boite est reliée avec une ouverture (15) d'évacuation de la cuve (1), de préférence une extrudeuse, l'ouverture (15) d'évacuation étant disposée dans la paroi (2) latérale en proximité de la face (3) en bas de la cuve (1).

6. Dispositif pour effectuer le procédé selon une des revendications 1 à 5, comportant au moins une cuve (1) dans laquelle est disposé au moins un outil (12, 21) de malaxage pivotable autour d'un axe (8), mettant en mouvement, malaxant, chauffant et éventuellement fragmentant un matériau polymère dans la cuve (1) en fonctionnement, dans la cuve (1) au-dessus du niveau du matériau situé dans la cuve (1) en fonctionnement ou au-dessus du niveau des grumeaux formés par le malaxage étant prévu au moins un moyen (50) d'admission pour l'entrée du fluide de lavage à l'intérieur de la cuve (1), au moins une lance (70) étant disposée sur une paroi (2) latérale de la cuve (1), qui s'engage à l'intérieur de la cuve (1) à partir de la paroi latérale (2), et le moyen (50) d'admission étant disposé sur la lance (79), **caractérisé en ce que** la lance (70) est essentiellement réalisée en forme de plaque et avec une épaisseur relativement réduite, comportant une face (83) supérieure orientée vers le haut, éventuellement parallèle à la face (3) en bas, et une face (84) inférieure orientée vers le bas, de préférence parallèle à la face (83) supérieure.

7. Dispositif selon la revendication 6, **caractérisé en ce que** la lance (70) est orientée parallèlement à l'outil (12, 21) de malaxage ou perpendiculairement à l'axe (8) et/ou **en ce que** la lance (70) est orientée essentiellement radialement vers l'intérieur.

8. Dispositif selon une des revendications 6 ou 7, **caractérisé en ce que** la lance (70) ou la face (83) supérieure présente la forme d'aileron de requin, avec un bord (80) antérieur orienté dans la direction de mouvement/pivotement de l'outil (12, 21) de malaxage et courbe, de préférence rond, et avec un bord (81) postérieur en aval, droit ou courbe, le bord (80) antérieur et le bord (81) postérieur convergeant de préférence en direction d'un sommet (82).

9. Dispositif selon une des revendications 6 à 8, **caractérisé en ce que** les outils (50) d'admission sont réalisés comme ouvertures ou buses individuelles, singulières, comportant respectivement de préférence un diamètre compris entre 10 et 30 mm, et/ou **en ce que** les moyens (50, 50a, 50b) d'admission rejoignent la face extérieure de la lance (70) en affleurement et/ou **en ce que** les moyens (50) d'admission sont réalisés ou disposés et sur la face (83) supérieure et sur la face (84) inférieure.

10. Dispositif selon une des revendications 6 à 9, **caractérisé en ce que** les moyens (50) d'admission sont éventuellement réalisés ou disposés uniquement dans ou sur le bord (81) postérieur et/ou **en ce que** plusieurs moyens (50) d'admission sont réalisés ou disposés sur chaque lance (70), de préférence dans des lignes parallèles au bord (80) antérieur ou au bord postérieur (81), notamment 3 à 8 ouvertures, la surface totale d'ouverture de toutes les ouvertures réalisés sur une ou sur toutes les lances (70) étant de préférence comprise entre 380 mm² et 6000 mm².

11. Dispositif selon une des revendications 6 à 10, **caractérisé en ce que** la lance (70) est disposée en dessous de le l'outil (12, 21) de malaxage le plus proche du fond et/ou **en ce que** la lance (70) est disposée dans la zone du tiers inférieur de la hauteur de la cuve (1) et/ou **en ce que** au moins deux outils (12, 21) de malaxage superposés sont prévus dans la cuve et la lance (70) est disposée de préférence centralement dans la zone entre les outils (12, 21) de malaxage et/ou **en ce que** la lance (70) est disposée dans la zone de la paroi (2) latérale de la cuve (1) dans laquelle les particules du matériau mis en mouvement ou en rotation dans la cuve (1) exercent le maximum de pression sur la paroi (2) latérale de la cuve (1).

12. Dispositif selon une des revendications 6 à 11, **caractérisé en ce que** plusieurs lances (70) sont prévues, étant disposées à la même hauteur et distribuées de préférence régulièrement au-dessus de la circonférence de la paroi (2) latérale de la cuve (1).

13. Dispositif selon une des revendications 6 à 12, **caractérisé en ce que** la lance (70) est creuse ou **en ce que** un canal ou une cavité en communication fluidique avec une zone à l'extérieur de la cuve (1) est réalisé(e) dans la lance (70), le fluide de lavage pouvant être inséré et couler vers le moyen (50) d'admission moyennant ladite communication fluidique.

14. Dispositif selon une des revendications 6 à 13, **caractérisé en ce que** la lance (70) s'étend au moins sur une longueur supérieure ou égale à 10 %, de préférence à 20 %, du radius de la cuve (1) et/ou **en ce que** le moyen (50) de chaque lance (70) le plus à l'intérieur présente une distance radiale de la paroi (2) latérale supérieure ou égale à 10 %, de préférence à 20 % du radius de la cuve (1).

15. Dispositif selon une des revendications 6 à 14, **caractérisé en ce que** la lance (70) est attachée sur la paroi (2) latérale de façon pivotable ou **en ce que** l'angle d'inclinaison ou de pose de la lance (70) ou l'angle de la face (83) supérieure est décalable (3) vers la face au fond.

16. Dispositif selon une des revendications 6 à 15, **caractérisé en ce que** au-dessus du niveau du matériau situé dans la cuve (1) en fonctionnement ou au-dessus du niveau des grumeaux formés par le malaxage est prévu au moins un moyen (51) d'évacuation pour évacuer le fluide de lavage enrichi ou saturé en matières perturbatrices de la cuve (1), par exemple une ouverture dans le couvercle ou dans la paroi de la cuve.

17. Dispositif selon une des revendications 6 à 16, **caractérisé en ce que** la cuve (1) est essentiellement cylindrique avec une face (3) en bas plane et une paroi (2) latérale ayant la forme d'une enveloppe cylindrique orientée verticalement à la paroi et/ou **en ce que** l'axe (8) de pivot correspond à l'axe centrale de la cuve (1) et/ou **en ce que** l'axe (8) de pivot ou l'axe centrale sont orientés verticalement ou perpendiculairement à la face (3) en bas.

18. Dispositif selon une des revendications 6 à 17, **caractérisé en ce qu'**au moins une vis (17), de préférence une extrudeuse, est prévue pour évacuer le matériau de la cuve (1), dont la boite est reliée par exemple radialement ou tangentiellement avec une ouverture (15) d'évacuation de la cuve (1) par une ouverture (27) d'amenée, l'ouverture (15) d'évacuation étant disposée dans la paroi (2) latérale en proximité de la face (3) en bas de la cuve (1).
